# EUROPÄISCHE PATENTSCHRIFT

(11) **EP 0 851 104 B1**
(45) Veröffentlichungstag und Bekanntmachung des Hinweises auf die Patenterteilung: **18.09.2002**
(21) Anmeldenummer: 97810878.5
(22) Anmeldetag: 18.11.1997
(51) Int. Cl.: F02C 7/16, F02C 3/30, F01K 21/04

(54) **Gasturbine mit Wärmerückwinnungsdampfgenerator zur Kühlung der Brennkammer, dann zur Einspritzung abwärts der Verbrennungzone**
Gas turbine with heat recovery steam generator for cooling the combustion chamber, then injecting downstream of the combustion zone
Turbine à gaz avec générateur de vapeur à récupération pour le refroidissement de la chambre de combustion, puis l'injection en aval de la zone de combustion

(30) Priorität: 27.12.1996 DE 19654472
(43) Veröffentlichungstag der Anmeldung: 01.07.1998
(73) Patentinhaber: Alstom, 75116 Paris (FR)
(72) Erfinder: Benim, Ali Cemal, Prof. Dr., 40476 Düsseldorf (DE); Joos, Franz, Dr., 79809 Weilheim/Bannholz (DE)
(74) Vertreter: Liebe, Rainer

(56) Entgegenhaltungen:
- EP-A- 0 314 112
- EP-A- 0 318 706
- EP-A- 0 674 099
- FR-A- 343 772
- GB-A- 1 140 757
- GB-A- 2 187 273
- GB-A- 2 236 145
- US-A- 3 238 719

## Beschreibung

### Technisches Gebiet

Die vorliegende Erfindung betrifft ein Verfahren gemäss Oberbegriff des Anspruchs 1.

### Stand der Technik

Es ist üblich, zur Kühlung von thermisch hochbelasteten Aggregaten einer Gasturbogruppe, beispielsweise einer Brennkammer, Druckluft einzusetzen, welche intermediär oder nach erfolgter Kompression zu diesem Zweck abgezweigt wird. Nun ist es aber so, dass in modernen Gasturbinen zur Erzielung einer schadstoffarmen Verbrennung bei maximiertem Wirkungsgrad der Brennstoff mit möglichst der gesamten Verdichterluft vorgemischt werden sollte. Luftverluste, wie sie bei den bekanntgewordenen Luftkühlungen der thermisch hochbelasteten Aggregate entstehen, sind deshalb zu vermeiden. Eine weitere Problematik bei solchen Luftkühlungen besteht darin, dass die thermisch verbrauchte Luft jeweils an passender Stelle in den Turbinenprozess rückgeführt werden muss, wobei eine Luftmenge, welche beispielsweise die Turbine gekühlt hat, dann nicht ohne weiteres als Kühlmedium in die Brennkammer geleitet werden kann, da dort regelmässig höhere Drücke vorherrschen. Demnach geht bei der Rückführung dieser Kühlluft in den Turbinenprozess immer Kühlpotential verloren, das mit anderen Mitteln ersetzt werden muss.

Diese Ausgangslage akzentuiert sich zum Beispiel, wenn die Gasturbogruppe für eine sequentielle Befeuerung ausgelegt ist.

Aus der GB 2 236 145 ist bekanntgeworden, in einem einer Gasturbogruppe nachgeschalteten Abhitzedampferzeuger eine Dampfmenge zu erzeugen, diese zur Kühlung der thermisch hochbelasteten Komponenten der Gasturbogruppe einzusetzen, und zur Leistungssteigerung stromauf der Brennkammer oder in der Brennkammer in den Gasturbinenprozess einzuführen. Dabei wird aus thermodynamischen und strömungstechnischen Ueberlegungen darauf geachtet, dass die Beimischung mit der Verbrennungsluft die Verbrennung als solche nicht beeinträchtigen kann. Dies führt aber regelmässig zu komplizierten Eindüsungstechniken, die nicht zuletzt mit der Gemischbildung zweier in Temperatur, Druck und Verhalten unterschiedlicher Medien im Zusammenhang stehen. Danebst darf nicht unerwähnt bleiben, dass hier die Brennstoffregelung äusserst diffizil zu handhaben ist. Aus der GB 2 187 273 ist die Filmkühlung der Primärzone einer Brennrammer mit Hilfe von Dampf bekanntgeworden, um die Entstehung von Luftüberschusszonen zu verweiden. Aus der EP 674 099 ist weiterhin bekanntgeworden, bei Gasturbogruppen, die in Kombination mit einem nachgeschalteten Dampfkreislauf betrieben werden, den bei der Kühlung der thermisch hochbelasteten Komponenten stark überhitzten Dampf in eine Dampfturbine zurückzuführen, und dort unter Abgabe einer Nutzleistung zu entspannen. Wird hierdurch einerseits der negative Einfluss des Dampfes auf die Verbrennung unterbunden, so kann der Dampf andererseits nur in einer Kombianlage tatsächlich nutzbringend verwendet werden, und es werden hohe Anforderungen an die Dichtheit der dampfführenden Komponenten im Inneren der Gasturbogruppe gestellt.

### Darstellung der Erfindung

Hier will die Erfindung Abhilfe schaffen. Der Erfindung, wie sie in den Ansprüchen gekennzeichnet ist, liegt die Aufgabe zugrunde, bei einem Verfahren der eingangs genannten Art die freie zur Verfügung stehende Dampfmenge weiternutzend zu verwenden, dergestalt, dass deren anschliessende Zumischung an passender Stelle in die Gasturbogruppe die Verbrennung in der Brennkammer nicht zu beeinträchtigt vermag.

Erfindungsgemäss soll die Kühlung der Brennkammer ausschliesslich mit einer Dampfmenge durchgeführt werden. Da dieser Dampf aus obigen Ueberlegungen frei zur Verfügung steht, soll er nicht in herkömmlicher Weise im Kreislauf geführt werden, sondern nach erfolgtem Kühlungszweck an passender Stelle in die Heissgasströmung der vorgängig gekühlten Brennkammer zugemischt werden, womit sich unter anderen die Konfiguration der Kühlelemente gegenüber einem an sich auch denkbaren geschlossenen Kühldampfkreislauf stark vereinfacht, da Dampfverluste bei dem erfindungsgemässen Vorschlag in einem gewissen Umfang in Kauf genommen werden können.

Die passende Stelle für die Zumischung der vorgängig zu Kühlzwecken eingesetzten Dampfmenge steht in einer Interdependenz mit dem anvisierten Ziel, die Verbrennung mit minimierten Schadstoff-Emissionen, insbesondere was die NOx-Emissionen betrifft, zu bewerkstelligen. Durch eine magere Verbrennung sind niedrige NOx-Emissionen zu erwarten, so dass die Zumischung der vorgängig zu Kühlzwecken eingesetzten Dampfmenge einerseits losgelöst von dieser Verbrennung, andererseits nach erfolgtem vollständigem Ausbrand erfolgen soll, so dass damit auch die CO- und UHC-Emissionen minimiert werden können. Diese passende Stelle ist im letzten Drittel einer solchen Brennkammer lokalisiert. Die vorgeschlagene Dampfkühlung kann selbstverständlich bei jeder Brennkammer zur Anwendung gelangen; hier erfolgen dann die Korrekturen für eine optimale Eindüsung von Fall zu Fall durch die Bestimmung der hierzu passenden Stelle in Abhängigkeit zur Ausdehnung der Ausbrandzone der betreffenden Brennkammer.

Diese Zumischung kann dabei homogen über den Umfang verteilt erfolgen, da der Dampf durch die erfolgte Kühlung bereits umfangsmässig verteilt vorliegt. Ausserdem kann hier durch eine einfache Auslegung der Eindüsungsöffnungen stromauf der Turbine jenes optimale Brennkammeraustrittsprofil für deren Beaufschlagung erzeugt werden.

Die Kühlung lässt sich in Gleichstrom oder Gegenstrom zur Heissgasströmung durchführen. Eine Kombination der beiden Arten ist auch möglich. Des weiteren ist es ohne weiteres möglich, vorgängig der Kühlung der Brennkammer die Dampfmenge zu Kühlzwecken im geschlossenen Strömungspfad durch die Turbine strömen zu lassen. Dies ist hier nur möglich, weil die Druckverhältnisse zwischen Turbine und Dampfmenge eine solche Führung zulassen.

Vorteilhafte und zweckmässige Weiterbildungen der erfindungsgemässen Aufgabenstellung sind in den weiteren Ansprüchen gekennzeichnet.

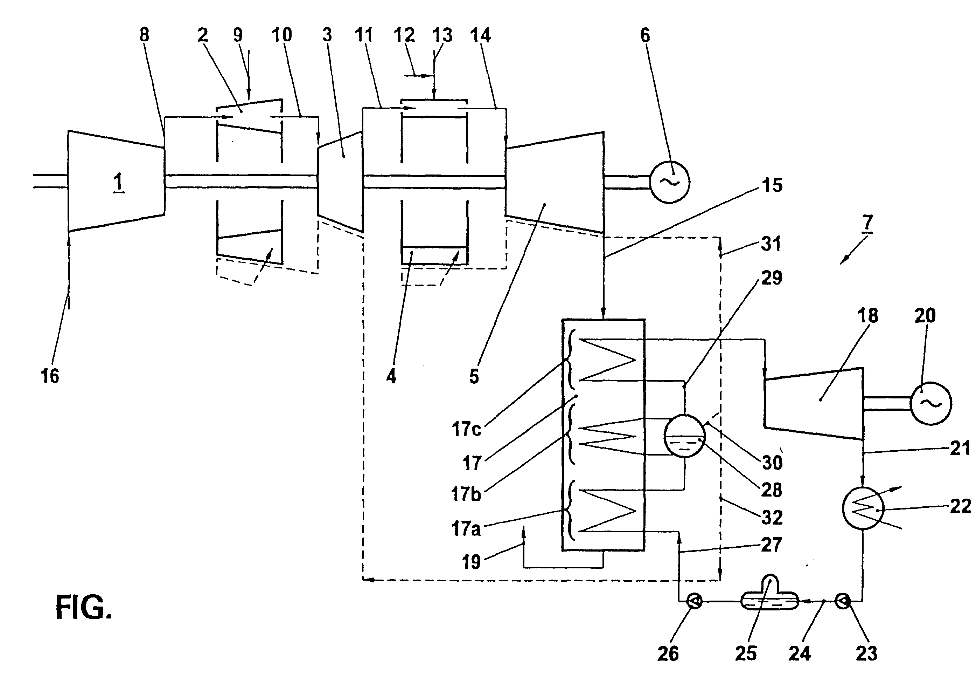

Im folgenden wird anhand der Figur ein Ausführungsbeispiel der Erfindung näher erläutert. Alle für das unmittelbare Verständnis der Erfindung nicht erforderlichen Elemente sind fortgelassen worden. Die Strömungrichtung der Medien ist mit Pfeilen angegeben.

### Kurze Beschreibung der Zeichnung

Die einzige Figur zweigt eine Kombinierte Gas/Dampf-Anlage (Kombianlage) mit der Führung einer Dampfmenge zu Kühlzwecken der thermisch belasteten resp. hochbelasteten Aggregate.

### Wege zur Ausführung der Erfindung, gewerbliche Verwendbarkeit

Die Figur zeigt eine Kombianlage, welche aus einer Gasturbogruppe und einem nachgeschalteten Dampfkreislauf 7 besteht. Die Gasturbogruppe selbst besteht aus einer Verdichtereinheit 1, einer der Verdichtereinheit 1 nachgeschalteten ersten Brennkammer 2, im folgenden HD-Brennkammer genannt, einer stromab dieser Brennkammer wirkenden HD-Turbine 3, einer der HD-Turbine nachgeschalteten zweiten Brennkammer 4, im folgenden ND-Brennkammer genannt, und einer stromab dieser Brennkammer wirkenden ND-Turbine 5. Ein Generator 6 sorgt für die Stromerzeugung. Die von der Verdichtereinheit 1 angesaugte Luft 16 wird nach erfolgter Kompression als verdichtete Luft 8 in die HD-Brennkammer 2 geleitet. Diese Brennkammer 2 wird mit einem Brennstoff 9 befeuert, der an sich gasförmig und/oder flüssig sein kann, je nach Art des in dieser Brennkammer eingesetzten Brenners. Brennkammern werden normalerweise mit einem Diffusionsbrenner betrieben; diese Brennkammer 2 soll indessen vorzugsweise mit einem Vormischbrenner betrieben werden, wie er in EP-B1-0 321 809 beschrieben ist, wobei dieser Erfindungsgegenstand integrierender Bestandteil dieser Beschreibung ist. Die Heissgase 10 aus der HD-Brennkammer 2 beaufschlagen zunächst die HD-Turbine 3. Dabei ist diese Turbine 3 so ausgelegt, dass hier eine minimale Expansion stattfindet, dergestalt, dass deren Abgase 11 eine verhältnismässig hohe Temperatur aufweisen. Stromab dieser Turbine 3 befindet sich die ND-Brennkammer 4, welche im wesentlichen die Form eines ringförmigen Zylinders hat. Diese Brennkammer 4 weist keine herkömmliche Brennerkonfiguration auf: Die Verbrennung geschieht hier durch Selbstzündung eines in die heissen Abgase 11 eingedüsten Brennstoffes 13. Ausgehend davon, dass es sich hier um einen gasförmigen Brennstoff, also beispielsweise Erdgas, handelt, müssen für eine Selbstzündung gewisse unabdingbare Voraussetzungen erfüllt werden: Zunächst ist davon auszugehen, dass eine Selbstzündung nach vorliegender Konstellation erst bei einer Temperatur um die 1000°C vonstatten geht, und dies soll auch bei Teillastbetrieb der Fall sein. Diese Forderung kann aber gewichtig eine optimale thermodynamische Auslegung des Gasturbinenprozesses negativ tangieren. Deshalb darf aus thermodynamischen Gründen das Druckverhältnis der HD-Turbine 3 nicht so weit angehoben werden, dass sich daraus eine niedrige Austrittstemperatur von beispielsweise ca. 500°C ergibt, wie sie für einen sicheren Betrieb einer nachgeschalteten konventionellen Brennkammer vorteilhaft wäre. Um eine gesicherte Selbstzündung in der ND-Brennkammer 4 auch bei ungünstigen Bedingungen zu gewährleisten, kann der in die ND-Brennkammer 4 eingedüste gasförmige Brennstoff 13 mit einer Menge eines anderen Brennstoffes 12, der eine niedrige Zündtemperatur aufweist, gemischt werden. Als Hilfsbrennstoff eines gasförmigen Basisbrennstoffes eignet sich hier Oel vorzüglich. Dieser flüssige Hilfsbrennstoff 12, entsprechend eingedüst, fungiert sozusagen als Zündschnur, und ermöglicht auch dann eine Selbstzündung in der ND-Brennkammer 4, wenn die Abgase 11 aus der HD-Turbine 3 eine Temperatur aufweisen, die unterhalb jener optimalen Selbstzündtemperatur liegt. Die in der ND-Brennkammer 4 bereitgestellten Heissgase 14 beaufschlagen anschliessend die ND-Turbine 5. Das kalorische Potential der Abgase 15 aus dieser ND-Turbine 5 kann weitergehend genutzt werden, beispielsweise durch Nachschaltung eines Dampfkreislaufes 7 zur Bereitstellung einer Dampfmenge zum Betreiben einer Dampfturbine und/oder Vorwärmung des Einspritzwassers.

Insbesondere bei einer solchen Konfiguration ist die thermische Belastung der Brennkammern sowie der Turbinen recht hoch, weshalb die Kühlung auch äusserst effizient ausfallen muss. Dabei muss gleichzeitig noch berücksichtigt werden, dass Gasturbogruppen dieser Hochleistungsstufe im allgemeinen wenig Luft zu Kühlzwecken freistellen können, sollen der Wirkungsgrad und die spezifische Leistung nicht markant sinken. Die Kühlung der thermisch belasteten Aggregate kann aber vorteilhaft durch Dampf geschehen, der bei dem hier nachgeschalteten Dampfkreislauf 7 ohnehin in genügender Menge und Qualität vorhanden ist. Ist ein solcher Dampfkreislauf nicht vorhanden, so lässt sich die hierzu benötigte Dampfmenge leicht anhand einer abgezweigten Teilmenge der Abwärme aus der letzten Turbine bereitstellen.

Die hochkalorischen Abgase 15 durchströmen einen Abhitzedampferzeuger 17 , in welchem in Wärmetauschverfahren Dampf erzeugt wird, der das Arbeitsmedium für eine nachgeschaltete mit einem Generator 20 gekoppelten Dampfturbine 18 bildet. Die dann thermisch ausgenutzten Abgase strömen als Rauchgase 19 vorzugsweise über eine nicht dargestellte Reinigungsanlage ins Freie. Möglich ist auch eine Weiternutzung dieser Rauchgase zu anderen Zwecken. Selbstverständlich ist es auch möglich, in Wirkverbindung mit dem Abhitzedampferzeuger 17 eine Zwischenüberhitzung vorzunehmen. Der entspannte Dampf 21 aus der genannten Dampfturbine 18 wird in einem wasser- oder luftgekühlten Kondensator 22 kondensiert. Durch eine stromab des Kondensators 22 angeordnete Förderpumpe 23 wird das Kondensat 24 in einen Speisewasserbehälter und Entgaser 25 gefördert. Durch Entnahme einer bestimmten Menge Anzapfdampf aus der Dampfturbine 18 kann das zersprühte Kondensat 24 auf Siedezustand gebracht und entgast werden. Eine weitere nachgeschaltete Förderpumpe 26 pumpt dann das Wasser 27 durch den Abhitzedampferzeuger 17. Zuerst durchläuft das Wasser 27 eine ND-Dampferzeugung 17a, anschliessend strömt dieser Dampf in eine Kesseltrommel 28. Im geschlossenen Kreislauf ist die Kesseltrommel 28 mit einer MD-Dampferzeugung 17b verbunden, dergestalt, dass hierein ein Sattdampf 29 entsteht, der dann durch eine HD-Dampferzeugung 17c beschickt wird, in welcher die qualitative Dampfbereitstellung für die Beaufschlagung der Dampfturbine 18 geschieht.

Zur Kühlung der Aggregate der Gasturbogruppe wird aus der Kesseltrommel 28 eine überschüssige Dampfmenge 30 entnommen. Durch Regelorgane lässt sich die benötigte Dampfmenge dann zu den einzelnen Aggregate führen. In der Figur sind zwei Kühldampfstränge 31, 32 ersichtlich. Mit der Dampfmenge 32 wird zunächst die HD-Turbine 3 im geschlossenen Strömungspfad, d.h. ohne Zumischung, gekühlt, anschliessend wird mit dieser Dampfmenge die Brennkammer 2, in Gleich- oder Gegenstrom zur Heissgasströmung, gekühlt. Nach abgeschlossener Kühlung wird die Dampfmenge dann an geeigneter Stelle, vorzugsweise innerhalb des letzten Drittels dieser Brennkammer der Heissgasströmung zugemischt. Damit lässt sich ohne Beeinflussung der auf minimierte NOx-Emissionen ausgelegten Verbrennung eine maximierte Leistungssteigerung der Anlage erreichen. Darüber hinaus geschieht die Eindüsung thermodynamisch und strömungstechnisch an optimaler Stelle, wobei ferner mit dieser Vorkehrung eine gewichtige Reduzierung der aus der Ausbrandzone verbleibenden CO- und UHC-Emissionen erreicht wird. Die andere Dampfmenge 31 wird zu gleichen Kühlzwecken, in analoger Weise zum oben beschriebenen Kühlungspfad für die ND-Brennkammer 4 und ND-Turbine 5 eingesetzt. Die Entnahme der hier benötigte Kühldampfmenge ist nicht auf die Kesseltrommel 28 beschränkt.

Die zu kühlenden Aggregate 2, 3, 4, 5 lassen sich auch, im Gegensatz zu den in der Figur gezeigten Serieschaltungen, individuell kühlen, wobei dann die Zumischung der einzelnen Dampfmenge in die Heissgasströmungen von Fall zu Fall vorgenommen werden muss. Grundsätzlich ist hier eine individuelle Zumischung der zu Kühlzwecken eingesetzten Dampfmenge in die jeweilige Brennkammer, abströmungsseitig der Ausbrandzone, auch möglich. Bei individueller Kühlung der thermisch hochbelasteten Aggregate der Gasturbogruppe lassen sich sodann verschiedene Dampfmenge zusammenfassen, bevor sie in die Brennkammern 2, 4 eingeleitet werden.

### Bezugszeichenliste

- 1: Verdichtereinheit
- 2: Hochdruck-Brennkammer, HD-Brennkammer
- 3: Hochdruck-Turbine, HD-Turbine
- 4: Niederdruck-Brennkammer, ND-Brennkammer
- 5: Niederdruck-Brennkammer, ND-Brennkammer
- 6: Generator
- 7: Dampfkreislauf
- 8: Verdichtete Luft
- 9: Brennstoff
- 10: Heissgase
- 11: Heisse Abgase
- 12: Hilfsbrennstoff
- 13: Brennstoff
- 14: Heissgase
- 15: Abgase
- 16: Ansaugluft
- 17: Abhitzedampferzeuger
- 17a: Niederdruck-Dampferzeuger
- 17b: Mitteldruck-Dampferzeuger
- 17c: Hochdruck-Dampferzeuger
- 18: Dampfturbine
- 19: Rauchgase
- 20: Generator
- 21: Abdampf, Entspannter Dampf
- 22: Kondensator
- 23: Förderpumpe
- 24: Kondensat
- 25: Speisewasserbehälter und Entgase
- 26: Förderpumpe
- 27: Wasser
- 28: Kesseltrommel
- 29: Sattdampf
- 30: Kühldampf
- 31: Kühldampfpfad
- 32: Kühldampfpfad

## Patentansprüche

1. Verfahren zur Kühlung einer Gasturbogruppe mit einer Dampfmenge, wobei die Gasturbogruppe im wesentlichen aus einer Verdichtereinheit, mindestens einer Brennkammer, mindestens einer Turbine und mindestens einem Generator besteht, wobei die mindestens zur Kühlung der Brennkammer (2,4) eingesetzte Dampfmenge (31, 32) nach erfolgtem Kühlungsprozess in die Heissgasströmung der Brennkammer zugemischt wird, **dadurch gekennzeichnet, dass** die Zumischung des Dampfes in die Heissgasströmung ausschliesslich stromab der in der Brennkammer wirkenden Ausbrandzone erfolgt.

2. Verfahren nach Anspruch 1, dass die eingesetzte Dampfmenge (31, 32) zuerst eine Turbine (3, 5) im geschlossenen Strömungspfad und anschliessend im offenen Strömungspfad eine Brennkammer (2, 4) kühlt.

3. Verfahren nach Anspruch 1, **dadurch gekennzeichnet, dass** die zu Kühlzwecken eingesetzte Dampfmenge (31, 32) einem der Gasturbogruppe nachgeschalteten Dampfkreislauf (7) entnommen wird.

4. Verfahren nach Anspruch 3, **dadurch gekennzeichnet, dass** die zu Kühlzwecken eingesetzte Dampfmenge (31, 32) einem zum Dampfkreislauf (7) gehörenden Abhitzedampferzeuger (17) entnommen wird.

5. Verfahren nach Anspruch 4, **dadurch gekennzeichnet, dass** die zu Kühlzwecken eingesetzte Dampfmenge (31, 32) einer mit dem Abhitzedampferzeuger (17) in Wirkverbindung stehenden Kesseltrommel (28) entnommen wird.

6. Verfahren nach den Ansprüchen 1 oder 2, **dadurch gekennzeichnet, dass** die Zumischung der eingesetzten Dampfmenge (31, 32) nach erfolgter Kühlung innerhalb des letzten Drittels der Brennkammer (2, 4) vorgenommen wird.

## Claims

1. Method of cooling a gas-turbine group with a steam quantity, the gas-turbine group essentially comprising a compressor unit, at least one combustion chamber, at least one turbine and at least one generator, **characterized in that** the steam quantity (31, 32) at least used for cooling the combustion chamber (2, 4) being admixed with the hot-gas flow of the combustion chamber after the cooling process has been effected, **characterized in that** the steam is admixed with the hot-gas flow exclusively downstream of the burn-out zone acting in the combustion chamber.

2. Method according to Claim 1, **characterized in that** the steam quantity (31, 32) used cools first a turbine (3, 5) in a closed flow path and then a combustion chamber (2, 4) in an open flow path.

3. Method according to Claim 1, **characterized in that** the steam quantity (31, 32) used for cooling purposes is extracted from a steam circuit (7) connected downstream of the gas-turbine group.

4. Method according to Claim 3, **characterized in that** the steam quantity (31, 32) used for cooling purposes is extracted from a waste-heat steam generator (17) belonging to the steam circuit (7).

5. Method according to Claim 4, **characterized in that** the steam quantity (31, 32) used for cooling purposes is extracted from a boiler drum (28) interacting with the waste-heat steam generator (17).

6. Method according to Claim 1 or 2, **characterized in that** the admixing of the steam quantity (31, 32) used is carried out within the last third of the combustion chamber (2, 4) after cooling has been effected.

## Revendications

1. Procédé pour le refroidissement d'un turbogroupe à gaz avec une quantité de vapeur, dans lequel le turbogroupe à gaz se compose essentiellement d'une unité de compresseur, d'au moins une chambre de combustion, d'au moins une turbine et d'au moins un générateur, dans lequel la quantité de vapeur (31, 32) utilisée au moins pour le refroidissement des chambres de combustion (2, 4) est ajoutée au courant de gaz chauds des chambres de combustion lorsque l'opération de refroidissement est terminée, **caractérisé en ce que** l'ajout de la vapeur dans le courant de gaz chauds est effectué exclusivement en aval de la zone de combustion opérant dans la chambre de combustion.

2. Procédé suivant la revendication 1, **caractérisé en ce que** la quantité de vapeur utilisée (31, 32) refroidit d'abord une turbine (3, 5) en un chemin d'écoulement fermé et ensuite une chambre de combustion (2, 4) en un chemin d'écoulement ouvert.

3. Procédé suivant la revendication 1, **caractérisé en ce que** la quantité de vapeur (31, 32) utilisée à des fins de refroidissement est prélevée dans un circuit de vapeur (7) installé à la suite du turbogroupe à gaz.

4. Procédé suivant la revendication 3, **caractérisé en ce que** la quantité de vapeur (31, 32) utilisée à des fins de refroidissement est prélevée dans un générateur de vapeur à récupération de chaleur perdue (17) faisant partie du circuit de vapeur (7).

5. Procédé suivant la revendication 4, **caractérisé en ce que** la quantité de vapeur (31, 32) utilisée à des fins de refroidissement est prélevée dans un tambour de chaudière (28) se trouvant en communication active avec le générateur de vapeur à récupération de chaleur perdue (17).

6. Procédé suivant les revendications 1 ou 2, **caractérisé en ce que** l'ajout de la quantité de vapeur utilisée (31, 32) est effectué, une fois le refroidissement terminé, à l'intérieur du dernier tiers des chambres de combustion (2, 4).
